# EUROPÄISCHE PATENTSCHRIFT

(11) **EP 4 313 708 B1**
(45) Veröffentlichungstag und Bekanntmachung des Hinweises auf die Patenterteilung: **18.11.2026**
(21) Anmeldenummer: 22707112.3
(22) Anmeldetag: 22.02.2022
(51) Int. Cl.: B60W 30/18, B60W 10/04, B60W 10/184, B60W 50/14, A41D 1/00

(54) **VERFAHREN ZUM BETREIBEN EINES KRAFTFAHRZEUGS, SYSTEM**
METHOD FOR OPERATING A MOTOR VEHICLE, AND SYSTEM
PROCÉDÉ POUR FAIRE FONCTIONNER UN VÉHICULE AUTOMOBILE, SYSTÈME

(30) Priorität: 29.03.2021 DE 102021203112
(43) Veröffentlichungstag der Anmeldung: 07.02.2024
(73) Patentinhaber: Robert Bosch GmbH, 70442 Stuttgart (DE)
(72) Erfinder: COSYNS, Christian, 31228 Peine (DE); MAYER, Florian, 71254 Ditzingen (DE); MOERBE, Matthias, 74360 Ilsfeld-Helfenberg (DE)
(86) Internationale Anmeldenummer: PCT/EP2022/054306
(87) Internationale Veröffentlichungsnummer: WO 2022/207188

(56) Entgegenhaltungen:
- EP-A1- 3 260 324
- EP-A1- 3 604 097
- DE-A1- 102017 200 668
- DE-A1- 102020 203 457
- US-A1- 2017 236 346

## Beschreibung

Die Erfindung betrifft ein Verfahren zum Betreiben eines Kraftfahrzeugs.

Außerdem betrifft die Erfindung ein System mit einem Kraftfahrzeug.

### Stand der Technik

Aus dem Stand der Technik sind Verfahren bekannt, in denen ein Kraftfahrzeug in Abhängigkeit von einer aktuellen Position eines Benutzers im Umfeld des Kraftfahrzeugs wahlweise entriegelt oder verriegelt wird. Ein derartiges Verfahren ist beispielsweise aus der Offenlegungsschrift WO 2018 206 418 A1 bekannt. In diesem vorbekannten Verfahren wird die aktuelle Position des Benutzers durch Kommunikation einer fahrzeugseitigen Kommunikationsmittelanordnung mit einem dem Benutzer zugeordneten Nutzergerät ermittelt.

Die Offenlegungsschrift WO 2020 002 392 A1 offenbart ein weiteres Verfahren, in dem ein Kraftfahrzeug in Abhängigkeit von der aktuellen Position des Benutzers im Umfeld des Kraftfahrzeugs wahlweise entriegelt oder verriegelt wird.

DE 10 2020 203 457 A1 offenbart eine Steuervorrichtung, die ein Sattelfahrzeug abhängig von einer Bewegung eines Insassen steuert.

US 2017 0236346 A1 offenbart eine Fernsteuerung für ein Fahrzeug.

EP 3 604 097 A1 offenbart eine Vorrichtung, die ein Lenkverhalten eines Fahrers einen Aufsitzfahrzeugs erfasst.DE 10 2017 200 668 A1 offenbart ein Verfahren zur Absicherung eines Zugangs zu einem System mittels Funksignalen.

EP 3 260 324 A1 offenbart ein Bremssystem für Freizeitfahrzeuge mit einem Haltegurt, einem Steuerungssystem und einer Bremse. Das Steuerungssystem aktiviert einen Verlangsamungstimer, wenn das Gurtsystem aus dem Fahrzeug entfernt wird, und aktiviert dann einen Stoppuhr, wenn der Verlangsamungstimer abgelaufen ist.

### Offenbarung der Erfindung

Es wird ein Verfahren zum Betreiben eines Kraftfahrzeugs bereitgestellt. Das erfindungsgemäße Verfahren mit den Merkmalen des Anspruchs 1 zeichnet sich dadurch aus, dass eine Abweichung einer aktuellen Fahrposition eines Fahrers des Kraftfahrzeugs von einer erwarteten Referenz-Fahrposition des Fahrers ermittelt wird, und dass das Kraftfahrzeug in Abhängigkeit von der ermittelten Abweichung angesteuert wird. Es wird also zumindest ein Element des Kraftfahrzeugs in Abhängigkeit von der Abweichung angesteuert. Beispielsweise wird die Ansteuerung des Kraftfahrzeugs verändert beziehungsweise angepasst, wenn die Abweichung einen vorgegebenen Schwellenwert übersteigt. Unter der aktuellen Fahrposition ist im Rahmen der Offenbarung die aktuelle Position eines Körperteils des Fahrers während der Fahrt mit dem Kraftfahrzeug zu verstehen. Unter der erwarteten Referenz-Fahrposition ist entsprechend die Position zu verstehen, die das betreffende Körperteil während der Fahrt des Fahrers mit dem Kraftfahrzeug üblicherweise einnimmt. Der Erfindung liegt die Erkenntnis zugrunde, dass beispielsweise die Fahrsicherheit und/oder der Fahrkomfort durch die erfindungsgemäße Vorgehensweise gesteigert werden können. Vorzugsweise wird als Abweichung eine Entfernung zwischen der aktuellen Fahrposition und der Referenz-Fahrposition ermittelt. Wird beispielsweise als aktuelle Fahrposition des Fahrers die aktuelle Position des Kopfes des Fahrers während der Fahrt ermittelt, so ist die Abweichung dann die Entfernung zwischen der aktuellen Position des Kopfes und der erwarteten Referenz-Fahrposition des Kopfes. Vorzugsweise wird als Abweichung eine Entfernung zwischen der aktuellen Fahrposition und der Referenz-Fahrposition in einer vorgegebenen Richtung ermittelt, beispielsweise die Entfernung in Längsachsenrichtung des Kraftfahrzeugs. Hierdurch kann die Ansteuerung des Kraftfahrzeugs besonders präzise angepasst werden. Vorzugsweise wird eine bestimmte aktuelle Fahrposition ausgewählt und dem Ermitteln der Abweichung als Referenz-Fahrposition zugrunde gelegt. Beispielsweise wird die aktuelle Fahrposition unmittelbar nach Beginn der Fahrt oder zumindest im Wesentlichen unmittelbar nach Beginn der Fahrt ausgewählt. Alternativ dazu wird als Referenz-Fahrposition vorzugsweise eine Fahrposition ausgewählt, die der Fahrer bei einer vorgegebenen Fahrsituation einnimmt, beispielsweise bei Geradeausfahrt mit einer vorgegebenen Geschwindigkeit. Vorzugsweise ist das Kraftfahrzeug als Kraftrad, Quad, Schneemobil oder Jetski ausgebildet. Bei derartigen Kraftfahrzeugen sind die vorstehend und im Folgenden beschriebenen Vorteile besonders stark ausgeprägt.

Gemäß einer bevorzugten Ausführungsform ist vorgesehen, dass eine Antriebseinrichtung, eine Bremseinrichtung, eine Anzeigeeinrichtung und/oder ein Kommunikationsmodul des Kraftfahrzeugs in Abhängigkeit von der ermittelten Abweichung angesteuert werden. Durch eine Ansteuerung dieser Elemente des Kraftfahrzeugs in Abhängigkeit von der ermittelten Abweichung können die vorstehend aufgeführten Vorteile erreicht werden.

Vorzugsweise wird die aktuelle Fahrposition durch Ermitteln einer aktuellen Position eines dem Fahrer zugeordneten Nutzergerätes ermittelt. Bei dem Nutzergerät handelt es sich beispielsweise um eine Smartwatch oder ein Smartphone des Fahrers. Die Position eines derartigen Nutzergerätes ist während der Fahrt relativ zum Fahrer üblicherweise konstant, weil der Fahrer die Nutzergeräte während der Fahrt üblicherweise an derselben Stelle aufbewahrt beziehungsweise trägt. Insofern entspricht die Position des Nutzergerätes der Position eines bestimmten Körperteils des Fahrers. Zudem ist die aktuelle Position derartiger Nutzergeräte technisch einfach erfassbar, beispielsweise mittels einer fahrzeugseitigen Kommunikationsmittelanordnung. Die aktuelle Position des Nutzergerätes wird dann beispielsweise in Abhängigkeit von einer Zeitdifferenz zwischen Aussenden eines Signals durch das Nutzergerät und Empfangen des ausgesendeten Signals durch das oder die Kommunikationsmittel der Kommunikationsmittelanordnung ermittelt.

Gemäß einer bevorzugten Ausführungsform ist vorgesehen, dass die Antriebseinrichtung bei Ermitteln, dass die aktuelle Fahrposition in Vorwärtsfahrtrichtung des Kraftfahrzeugs hinter der Referenz-Fahrposition liegt, derart angesteuert wird, dass ein durch die Antriebseinrichtung bereitgestelltes Antriebsmoment verringert oder begrenzt wird. Liegt die aktuelle Fahrposition in Vorwärtsfahrtrichtung hinter der Referenz-Fahrposition, so könnte eine Erhöhung des aktuell bereitgestellten Antriebsmomentes oder eine Beibehaltung eines bereits hohen aktuell bereitgestellten Antriebsmomentes dazu führen, dass der Fahrer seine Balance verliert. Dies wird durch das Verringern oder Begrenzen des Antriebsmomentes vermieden. Vorzugsweise wird die Antriebseinrichtung bei Ermitteln, dass die aktuelle Fahrtposition oberhalb der Referenz-Fahrposition liegt, derart angesteuert, dass ein durch die Antriebseinrichtung bereitgestelltes Antriebsmoment verringert oder begrenzt wird. Liegt die aktuelle Fahrposition oberhalb der Referenz-Fahrposition, so ist davon auszugehen, dass der Fahrer im Stehen fährt. Auch in diesem Fall könnte ein hohes Antriebsmoment dazu führen, dass der Fahrer seine Balance verliert.

Gemäß einer bevorzugten Ausführungsform ist vorgesehen, dass die Bremseinrichtung bei Ermitteln, dass die aktuelle Fahrposition in Vorwärtsfahrtrichtung des Kraftfahrzeugs vor der Referenz-Fahrposition liegt, derart angesteuert wird, dass ein durch die Bremseinrichtung bereitgestelltes Bremsmoment verringert oder begrenzt wird. Liegt die aktuelle Fahrposition in Vorwärtsfahrtrichtung vor der Referenz-Fahrposition, so könnte eine Erhöhung des aktuell bereitgestellten Bremsmomentes oder eine Beibehaltung eines bereits hohen aktuell bereitgestellten Bremsmomentes dazu führen, dass der Fahrer seine Balance verliert. Dies wird durch das Verringern oder Begrenzen des Bremsmomentes vermieden. Vorzugsweise wird die Bremseinrichtung bei Ermitteln, dass die aktuelle Fahrtposition oberhalb der Referenz-Fahrtposition liegt, derart angesteuert, dass ein durch die Antriebseinrichtung bereitgestelltes Antriebsmoment verringert oder begrenzt wird.

Erfindungsgemäß ist vorgesehen, dass in Abhängigkeit von der Abweichung einerseits und einem Schräglagenwinkel des Kraftfahrzeugs andererseits eine aktuell durch den Fahrer verwendete Kurventechnik ermittelt wird, und dass das Kraftfahrzeug in Abhängigkeit von der ermittelten Kurventechnik angesteuert wird. Das Kraftfahrzeug ist vorzugsweise als einspuriges Kraftfahrzeug ausgebildet. Bei einspurigen Kraftfahrzeugen wird grundsätzlich zwischen den Kurventechniken "Legen", "Drücken" und "Hängen" unterschieden. Grundsätzlich wird anhand des Schräglagenwinkels des Kraftfahrzeugs erkannt, ob eine Kurve gefahren wird oder nicht. Nutzt der Fahrer die Kurventechnik "Legen", so liegt die Hochachse des Kraftfahrzeugs in der Sagittalebene des Fahrers und die aktuelle Fahrposition entspricht der Referenz-Fahrposition. Es wird also bestimmt, dass der Fahrer die Kurventechnik "Legen" verwendet, wenn der Schräglagenwinkel einen vorgegebenen Schwellenwert übersteigt und die Abweichung einen vorgegebenen Schwellenwert unterschreitet. Nutzt der Fahrer die Kurventechnik "Drücken", so drückt der Fahrer das Kraftfahrzeug in die notwendige Schräglage und bleibt dabei selbst relativ zur Fahrbahn aufrecht, sodass sich zwischen der Hochachse des Kraftfahrzeugs und der Sagittalebene des Fahrers ein Winkel bildet. Dieser Winkel geht mit einer Abweichung zwischen der aktuellen Fahrposition und der Referenz-Fahrposition einher. Nutzt der Fahrer die Kurventechnik "Hängen" ("Hanging-Off"), so lehnt der Fahrer seinen Körper aus der Fahrzeugmitte in Richtung Kurveninnenseite. Auch in diesem Fall bildet sich zwischen der Hochachse des Kraftfahrzeugs und der Sagittalebene des Fahrers ein Winkel. Dieser Winkel geht mit einer anderen Abweichung zwischen der aktuellen Fahrposition und der Referenz-Fahrposition einher als bei Verwendung der Kurventechnik "Drücken".

Vorzugsweise wird zumindest ein Assistenzsystem des Kraftfahrzeugs in Abhängigkeit von der ermittelten Kurventechnik wahlweise freigegeben oder gesperrt. Auch darunter ist ein Ansteuern des Kraftfahrzeugs zu verstehen. Beispielsweise wird das Assistenzsystem bei Bestimmen, dass der Fahrer die Kurventechnik "Hängen" verwendet, gesperrt. Gerade bei der Kurventechnik "Hängen" wäre der Eingriff eines Assistenzsystems für den Fahrer unerwartet beziehungsweise unerwünscht. Beispielsweise werden das Assistenzsystem ACC (Adaptive Cruise Control) und/oder das Assistenzsystem AEB (Automatic Emergency Brake) gesperrt.

Gemäß einer bevorzugten Ausführungsform ist vorgesehen, dass eine Anzeigeeinrichtung des Kraftfahrzeugs und/oder ein Kommunikationsmodul des Kraftfahrzeugs derart angesteuert werden, dass die Anzeigeeinrichtung und/oder das Kommunikationsmodul dem Fahrer eine Information bezüglich der ermittelten Kurventechnik bereitstellen. Auch darunter ist ein Ansteuern des Kraftfahrzeugs zu verstehen. Beispielsweise wird dem Fahrer eine Information dahingehend bereitgestellt, dass seine Kurventechnik von einer optimalen Kurventechnik abweicht beziehungsweise inwiefern seine Kurventechnik von einer optimalen Kurventechnik abweicht. Es wird also im weitesten Sinne eine Fahrlehrerfunktion bereitgestellt.

Das erfindungsgemäße System weist ein Kraftfahrzeug, zumindest ein an dem Kraftfahrzeug angeordnetes Fahrzeug-Kommunikationsmittel, zumindest ein getrennt von dem Kraftfahrzeug handhabbares und einem Fahrer des Kraftfahrzeugs zugeordnetes Nutzergerät und eine Auswerteeinrichtung auf. Das erfindungsgemäße System zeichnet sich mit den Merkmalen des Anspruchs 9 dadurch aus, dass das Fahrzeug-Kommunikationsmittel dazu ausgebildet ist, durch das Nutzergerät ausgesendete Signale zu empfangen, und dass die Auswerteeinrichtung dazu ausgebildet ist, in Abhängigkeit von den empfangenen Signalen eine Abweichung einer aktuellen Fahrposition des Fahrers von einer erwarteten Referenz-Fahrposition des Fahrers zu ermitteln. Auch daraus ergeben sich die bereits genannten Vorteile. Beispielsweise kann die Ansteuerung des Kraftfahrzeugs in Abhängigkeit von der ermittelten Abweichung angepasst oder verändert werden. Zudem können anhand der Abweichung Informationen bezüglich eines Fahrstils des Fahrers ermittelt und dem Fahrer bereitgestellt werden. Weitere bevorzugte Merkmale und Merkmalskombinationen ergeben sich aus der Beschreibung sowie aus den Ansprüchen.

Erfindungsgemäss weist das System eine Steuereinrichtung zur Ansteuerung des Kraftfahrzeugs auf, wobei die Steuereinrichtung dazu ausgebildet ist, das Kraftfahrzeug in Abhängigkeit von der ermittelten Abweichung anzusteuern. Beispielsweise ist die Steuereinrichtung dazu ausgebildet, eine Antriebseinrichtung, eine Bremseinrichtung, eine Anzeigeeinrichtung und/oder ein Kommunikationsmodul des Kraftfahrzeugs in Abhängigkeit von der ermittelten Abweichung anzusteuern.

Vorzugsweise weist das System zumindest ein weiteres Fahrzeug-Kommunikationsmittel auf, wobei das Fahrzeug-Kommunikationsmittel und das weitere Fahrzeug-Kommunikationsmittel voneinander beabstandet an dem Kraftfahrzeug angeordnet sind. Durch zwei voneinander beabstandet angeordnete Fahrzeug-Kommunikationsmittel kann als Abweichung eine Entfernung in einer bestimmten Richtung ermittelt werden. In Abhängigkeit von einer derartigen Abweichung kann die Ansteuerung des Kraftfahrzeugs besonders präzise angepasst oder verändert werden. Beispielsweise ist eines der Fahrzeug-Kommunikationsmittel im Bereich eines vorderen Endes des Kraftfahrzeugs angeordnet und das andere Fahrzeug-Kommunikationsmittel im Bereich eines hinteren Endes des Kraftfahrzeugs. Bei einer derartigen Anordnung kann als Abweichung eine Entfernung in Längsachsenrichtung ermittelt werden. Alternativ dazu sind die beiden Fahrzeug-Kommunikationsmittel an unterschiedlichen Enden einer Lenkhandhabe des Kraftfahrzeugs angeordnet. Bei einer derartigen Anordnung kann als Abweichung eine Entfernung in Querachsenrichtung des Kraftfahrzeugs ermittelt werden. Gemäß einer weiteren Ausführungsform weist das System nur ein einziges Fahrzeug-Kommunikationsmittel auf. Durch ein einziges Fahrzeug-Kommunikationsmittel kann als Abweichung eine Entfernung von dem Fahrzeug-Kommunikationsmittel ermittelt werden. Vorzugsweise dient dabei die Position des Fahrzeug-Kommunikationsmittels als Referenz-Fahrposition.

Gemäß einer bevorzugten Ausführungsform des Systems ist vorgesehen, dass zumindest eines der Fahrzeug-Kommunikationsmittel als Bluetooth-Low-Energy-Modul (BLE-Modul) ausgebildet ist, und/oder dass zumindest eines der Fahrzeug-Kommunikationsmittel als Ultrabreitband-Modul (UWB-Modul) ausgebildet ist. Durch derartig ausgebildete Kommunikationsmittel kann die Abweichung besonders präzise ermittelt werden. Beispielsweise ermöglicht ein UWB-Modul das Ermitteln einer Abweichung mit einem Fehler von höchstens wenigen Zentimetern. Besonders bevorzugt ist eines der Fahrzeug-Kommunikationsmittel als BLE-Modul ausgebildet und das andere als UWB-Modul.

Vorzugsweise ist das Nutzergerät als Smartphone oder als Smartwatch ausgebildet. Derartige Geräte sind als Nutzergerät besonders geeignet, weil sie ohnehin über die notwendigen Kommunikationsmittel verfügen, um Signale auszusenden, die durch die Fahrzeug-Kommunikationsmittel erfasst werden können. Zudem ist die Position eines Smartphones des Fahrers oder einer Smartwatch des Fahrers während der Fahrt relativ zu einem bestimmten Körperteil des Fahrers üblicherweise konstant.

Vorzugsweise ist das Nutzergerät in ein Bekleidungsstück für den Fahrer integriert. Auch dadurch wird erreicht, dass die Position des Nutzergerätes während der Fahrt relativ zu einem bestimmten Körperteil des Fahrers konstant ist. Beispielsweise handelt es sich bei dem Bekleidungsstück um einen Fahranzug, einen Handschuh, eine Jacke oder einen Schutzhelm.

Gemäß einer bevorzugten Ausführungsform ist vorgesehen, dass das System zumindest ein weiteres Nutzergerät aufweist, wobei das Nutzergerät und das weitere Nutzergerät in jeweils unterschiedliche Ärmel des Bekleidungsstücks integriert sind. Bei einer derartigen Ausführungsform kann die aktuelle Fahrposition beider Hände des Fahrers besonders präzise überwacht werden. Insofern kann kontrolliert werden, ob sich die Hände des Fahrers während der Fahrt tatsächlich an der Lenkhandhabe befinden. Vorzugsweise wird dabei für jedes der Nutzergeräte jeweils eine aktuelle Fahrposition und eine Abweichung von einer Referenz-Fahrposition ermittelt. Vorzugsweise weist das System gemäß dieser Ausführungsform zwei Fahrzeug-Kommunikationsmittel auf, die an jeweils unterschiedlichen Enden der Lenkhandhabe befestigt sind. Wird in Abhängigkeit von der Abweichung oder den Abweichungen festgestellt, dass der Fahrer nur mit einer Hand oder mit keiner Hand die Lenkhandhabe hält, so steuert die Steuereinrichtung vorzugsweise eine Antriebseinrichtung des Kraftfahrzeug derart an, dass das durch die Antriebseinrichtung bereitgestellte Antriebsmoment verringert oder begrenzt wird. Alternativ oder zusätzlich steuert die Steuereinrichtung vorzugsweise eine Bremseinrichtung des Kraftfahrzeug derart an, dass das durch die Bremseinrichtung bereitgestellte Bremsmoment verringert oder begrenzt wird.

Gemäß einer bevorzugten Ausführungsform ist vorgesehen, dass das Kraftfahrzeug als Kraftrad, Quad, Schneemobil oder Jetski ausgebildet ist. Bei derartigen Kraftfahrzeugen sind die durch das System erreichten Vorteile besonders ausgeprägt.

Im Folgenden wird die Erfindung anhand der Zeichnungen näher erläutert. Dazu zeigen
- Figur 1: ein System zum Betreiben eines Kraftfahrzeugs und
- Figur 2: ein Verfahren zum Betreiben des Kraftfahrzeugs.

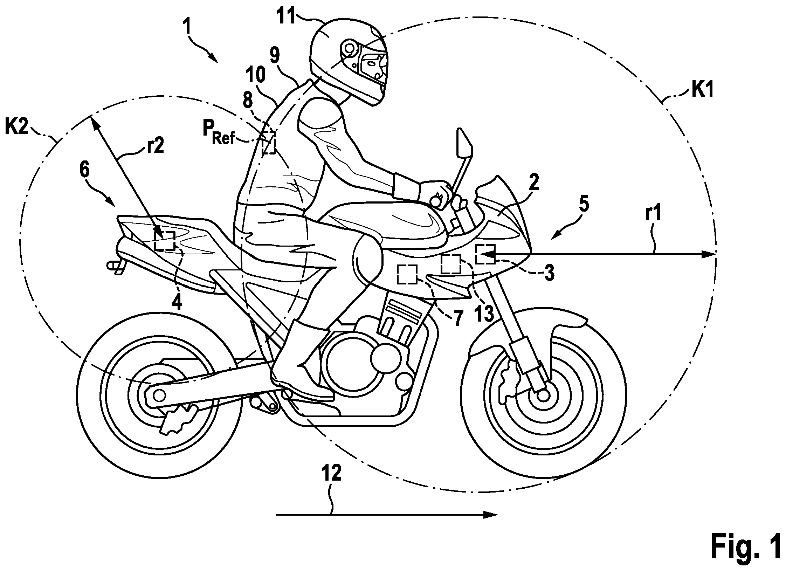

Figur 1 zeigt ein System 1. Das System 1 weist ein Kraftfahrzeug 2 auf. Vorliegend handelt es sich bei dem Kraftfahrzeug 2 um ein Kraftrad 2. Gemäß einem weiteren Ausführungsbeispiel handelt es sich bei dem Kraftfahrzeug 2 beispielsweise um ein Quad, ein Schneemobil oder ein Jetski.

Das System 1 weist ein an dem Kraftfahrzeug 2 angeordnetes erstes Fahrzeug-Kommunikationsmittel 3 auf. Das System 1 weist außerdem ein zweites Fahrzeug-Kommunikationsmittel 4 auf, das beabstandet von dem ersten Fahrzeug-Kommunikationsmittel 3 an dem Kraftfahrzeug 2 angeordnet ist. Vorliegend ist das erste Fahrzeug-Kommunikationsmittel 3 im Bereich eines vorderen Endes 5 des Kraftfahrzeugs 2 angeordnet. Das zweite Fahrzeug-Kommunikationsmittel 4 ist im Bereich eines hinteren Endes 6 des Kraftfahrzeugs 2 angeordnet.

Die Fahrzeugkommunikationsmittel 3 und 4 sind beispielsweise als BLE-Modul oder als UWB-Modul ausgebildet. Gemäß einem besonders bevorzugten Ausführungsbeispiel ist eines der Fahrzeug-Kommunikationsmittel 3 und 4 als BLE-Modul ausgebildet und das andere der Fahrzeug-Kommunikationsmittel 3 oder 4 als UWB-Modul.

Das System 1 weist außerdem eine Auswerteeinrichtung 13 auf. Die Auswerteeinrichtung 13 ist kommunikationstechnisch mit den Fahrzeug-Kommunikationsmitteln 3 und 4 verbunden.

Das System 1 weist außerdem eine Steuereinrichtung 7 auf. Die Steuereinrichtung 7 ist dazu ausgebildet, eines oder mehrere Elemente des Kraftfahrzeugs 2 anzusteuern. Beispielsweise ist die Steuereinrichtung 7 dazu ausgebildet, eine Antriebseinrichtung, eine Bremseinrichtung, eine Anzeigeeinrichtung und/oder ein Kommunikationsmodul des Kraftfahrzeugs 2 anzusteuern. Bei dem Kommunikationsmodul handelt es sich beispielsweise um eines der Fahrzeug-Kommunikationsmittel 3 und 4.

Das System 1 weist außerdem zumindest ein Nutzergerät 8 auf, das getrennt von dem Kraftfahrzeug 2 handhabbar und einem Fahrer 9 des Kraftfahrzeugs 2 zugeordnet ist. Vorliegend ist ein einziges Nutzergerät 8 vorhanden, das im Bereich des Rückens des Fahrers 9 in einen Fahranzug 10 des Fahrers 9 integriert ist. Gemäß einem weiteren Ausführungsbeispiel ist das Nutzergerät 8 beispielsweise als Smartphone oder als Smartwatch ausgebildet.

Das Nutzergerät 8 ist dazu ausgebildet, Signale auszusenden. Die Fahrzeug-Kommunikationsmittel 3 und 4 sind dazu ausgebildet, durch das Nutzergerät 8 ausgesendete Signale zu empfangen.

Die Auswerteeinrichtung 13 ist dazu ausgebildet, in Abhängigkeit von den durch die Fahrzeug-Kommunikationsmittel 3 und 4 empfangenen Signalen eine Abweichung einer aktuellen Fahrposition des Fahrers 9 von einer erwarteten Referenz-Fahrposition P_{Ref} zu ermitteln. Weil das Nutzergerät 8 im Bereich des Rückens des Fahrers 9 in den Fahranzug 10 des Fahrers 9 integriert ist, ist die Position des Nutzergerätes 8 relativ zu dem Rücken des Fahrers 9 während einer Fahrt des Fahrers 9 mit dem Kraftfahrzeugs 2 zumindest im Wesentlichen konstant. Demnach entspricht die aktuelle Position des Nutzergerätes 8 aufgrund seiner Anordnung zumindest im Wesentlichen der aktuellen Fahrposition des Rückens des Fahrers 9. Gemäß dem in Figur 1 dargestellten Ausführungsbeispiel entspricht die aktuelle Position des Nutzergerätes 8 der Referenz-Fahrposition P_{Ref}. Die Position des Fahrers 9 auf dem Kraftfahrzeug 2 entspricht also der erwarteten Position.

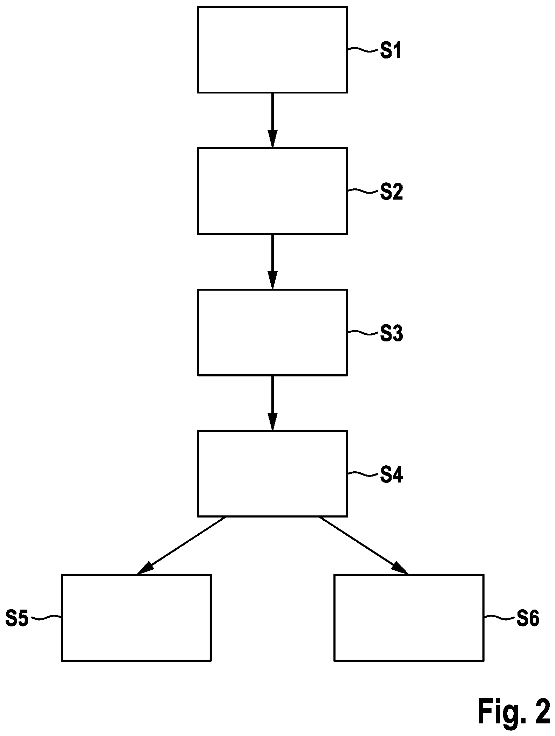

Die Steuereinrichtung 7 ist dazu ausgebildet, das Kraftfahrzeug 2 in Abhängigkeit von der ermittelten Abweichung anzusteuern. Dies wird im Folgenden mit Bezug auf Figur 2 näher erläutert. Diese zeigt ein Verfahren zum Betreiben des Kraftfahrzeugs 2 anhand eines Flussdiagramms.

In einem ersten Schritt S1 sendet das Nutzergerät 8 Signale aus, die durch die Fahrzeugkommunikationsmittel 3 und 4 empfangbar sind. Sind die Fahrzeugkommunikationsmittel 3 und 4 als BLE-Module ausgebildet, so sendet das Nutzergerät 8 Bluetooth-Signale aus. Sind die Fahrzeug-Kommunikationsmittel 3 und 4 als UWB-Module ausgebildet, so sendet das Nutzergerät 8 Ultra-Breitbandsignale aus. Ist eines der Fahrzeug-Kommunikationsmittel als BLE-Modul ausgebildet und das andere als UWB-Modul, so sendet das Nutzergerät 8 sowohl Bluetooth-Signale als auch Ultra-Breitbandsignale aus.

In einem zweiten Schritt S2 werden die ausgesendete Signale durch die Fahrzeug-Kommunikationsmittel 3 und 4 empfangenen und der Auswerteeinrichtung 13 bereitgestellt. Hierzu sind die Fahrzeug-Kommunikationsmittel 3 und 4 mit der Auswerteeinrichtung 13 drahtlos oder drahtgebunden kommunikationstechnisch verbunden.

In einem dritten Schritt S3 ermittelt die Auswerteeinrichtung 13 die aktuelle Position des Nutzergerätes 8 und somit die aktuelle Fahrposition des Rückens des Fahrers 9. Beispielsweise ermittelt die Auswerteeinrichtung 13 die aktuelle Fahrposition in Abhängigkeit von den Laufzeiten der empfangenen Signale. Gemäß dem in Figur 1 dargestellten Ausführungsbeispiel sind zwei Fahrzeug-Kommunikationsmittel 3 und 4 vorhanden. Insofern ist das Ermitteln der aktuellen Position des Nutzergerätes 8 nicht eindeutig. Die Laufzeit des Signals vor Empfangen durch das erste Fahrzeug-Kommunikationsmittel 3 korrespondiert mit einer Entfernung r1 zwischen dem Nutzergerät 8 und dem ersten Fahrzeug-Kommunikationsmittel 3. Insofern liegt die aktuelle Position des Nutzergerätes 8 auf einer Außenfläche einer Kugel K1, wobei der Mittelpunkt der Kugel K1 das erste Fahrzeug-Kommunikationsmittel 3 ist, und wobei der Radius der Kugel K1 die Entfernung r1 ist. Die Laufzeit des Signals vor Empfangen durch das zweite Fahrzeug-Kommunikationsmittel 4 korrespondiert mit einer Entfernung r2 zwischen dem Nutzergerät 8 und dem zweiten Fahrzeug-Kommunikationsmittel 4. Insofern liegt die aktuelle Position des Nutzergerätes 8 auf einer Außenfläche einer Kugel K2, wobei der Mittelpunkt der Kugel K2 das zweite Fahrzeug-Kommunikationsmittel 4 ist, und wobei der Radius der Kugel K2 die Entfernung r2 ist. Entsprechend wird als aktuelle Fahrposition ein Schnittkreis erhalten, der verschiedene mögliche Positionen beschreibt. Dieser Schnittkreis ist aufgrund der Anordnung der Fahrzeug-Kommunikationsmittel 3 und 4 zumindest im Wesentlichen senkrecht zu der Längsachse des Kraftfahrzeugs 2 beziehungsweise senkrecht zu der Vorwärtsfahrtrichtung 12 ausgerichtet.

In einem vierten Schritt S4 ermittelt die Auswerteeinrichtung 13 eine Abweichung der in dem Schritt S3 ermittelten aktuellen Fahrposition von der erwarteten Referenz-Fahrposition P_{Ref}. Die Referenz-Fahrposition P_{Ref} ist die Fahrposition, die der Fahrer 9 beziehungsweise das betreffende Körperteil des Fahrers 9 bei einer Fahrt mit dem Kraftfahrzeug 2 üblicherweise einnimmt. Vorliegend ermittelt die Auswerteeinrichtung 13 als Abweichung eine Entfernung der aktuellen Fahrposition von der Referenz-Fahrposition P_{Ref} in Längsachsenrichtung. Weil der vorstehend erwähnte Schnittkreis zumindest im Wesentlichen senkrecht zu der Längsachse ausgerichtet ist, ist die ermittelte Abweichung eindeutig.

Unterschreitet die Abweichung einen vorgegebenen Schwellenwert, so wird auf einen fünften Schritt S5 verwiesen. In dem fünften Schritt S5 wird das Kraftfahrzeug 2 dann in einem Standardmodus betrieben. Dies ist beispielsweise bei der aktuellen Fahrposition gemäß Figur 1 der Fall. In dem in Figur 1 dargestellten Ausführungsbeispiel entspricht die aktuelle Fahrposition der Referenz-Fahrposition P_{Ref}.

Übersteigt die Abweichung jedoch den Schwellenwert, so wird auf einen sechsten Schritt S6 verwiesen. In dem sechsten Schritt S6 wird das Kraftfahrzeug 2 dann in Abhängigkeit von der ermittelten Abweichung angesteuert beziehungsweise betrieben.

Stellt die Auswerteeinrichtung 13 beispielsweise anhand der ermittelten Abweichung fest, dass die aktuelle Fahrposition in Vorwärtsfahrtrichtung 12 des Kraftfahrzeugs 2 um mehr als den Schwellenwert hinter der Referenz-Fahrposition P_{Ref} liegt, so steuert die Steuereinrichtung 7 die Antriebseinrichtung des Kraftfahrzeugs 2 in dem Schritt S6 derart an, dass ein durch die Antriebseinrichtung bereitgestelltes Antriebsmoment verringert oder begrenzt wird. Durch eine Erhöhung des Antriebsmoment es oder eine Beibehaltung eines bereits hohen Antriebsmomentes könnte ansonsten der Fahrer 9 seine Balance verlieren.

Stellt die Auswerteeinrichtung 13 jedoch anhand der Abweichung fest, dass die aktuelle Fahrposition in Vorwärtsfahrtrichtung des Kraftfahrzeugs 2 um mehr als den Schwellenwert vor der Referenz-Fahrposition P_{Ref} liegt, so steuert die Steuereinrichtung 7 die Bremseinrichtung des Kraftfahrzeugs 2 in dem Schritt S6 derart an, dass ein durch die Bremseinrichtung bereitgestelltes Bremsmoment verringert oder begrenzt wird. Durch eine Erhöhung des Bremsmoment das oder eine Beibehaltung eines bereits hohen Bremsmoment das könnte ansonsten der Fahrer 9 seine Balance verlieren.

Gemäß einem weiteren Ausführungsbeispiel des Systems 1 sind die Fahrzeug-Kommunikationsmittel 3 und 4 an jeweils unterschiedlichen Enden einer Lenkhandhabe des Kraftfahrzeugs 2 angeordnet.

Bei einer derartigen Anordnung kann als Abweichung eine Entfernung in Querachsenrichtung des Kraftfahrzeugs 2 eindeutig ermittelt werden. Zudem kann bei diesem Ausführungsbeispiel in Abhängigkeit von einer Schrägwinkellage des Kraftfahrzeugs 2 einerseits und der Abweichung, also der Entfernung in Querachsenrichtung, andererseits eine aktuell durch den Fahrer 9 verwendete Kurventechnik ermittelt werden.

Stellt die Auswerteeinrichtung 13 anhand der Abweichung und der Schrägwinkellage fest, dass der Fahrer 9 aktuell die Kurventechnik "Hängen" verwendet, so werden in dem Schritt S6 Assistenzsysteme des Kraftfahrzeugs 2 durch die Steuereinrichtung 7 gesperrt.

Gemäß einem weiteren Ausführungsbeispiel weist das System 1 zwei Nutzergeräte auf, wobei ein erstes der Nutzergeräte in einen ersten Ärmel des Fahranzugs 10 integriert ist, und wobei ein zweites der Nutzergeräte in einen zweiten Ärmel des Fahranzugs 10 integriert ist. Auch bei dieser Ausführungsform sind die Fahrzeug-Kommunikationsmittel 3 und 4 vorzugsweise an den Enden der Lenkhandhabe angeordnet.

Bei einer derartigen Ausgestaltung des Systems 1 kann beispielsweise festgestellt werden, ob der Fahrer 9 während der Fahrt die Lenkhandhabe mit beiden Händen greift. Hierzu wird für jedes der Nutzergeräte jeweils eine aktuelle Fahrposition ermittelt und mit einer jeweiligen Referenz-Fahrposition verglichen. Vorzugsweise ist eines der Fahrzeugkommunikationsmittel 3 und 4 einem der Nutzergeräte zugeordnet und die Referenz-Fahrtposition für dieses Nutzergerät entspricht der Position dieses Fahrzeugkommunikationsmittels 3 oder 4. Das andere der Fahrzeugkommunikationsmittel 3 und 4 ist dann dem anderen der Nutzergeräte zugeordnet und die Referenz-Fahrposition für dieses Nutzergerät entspricht der Position des anderen Fahrzeug-Kommunikationsmittels 3 oder 4.

Wird anhand der ermittelten Abweichungen festgestellt, dass der Fahrer nur eine Hand oder keine Hand an der Lenkhandhabe hat, so steuert die Steuereinrichtung 7 in dem Schritt S6 die Antriebseinrichtung derart an, dass das bereitgestellte Antriebsmoment verringert oder begrenzt wird. Zusätzlich steuert die Steuereinrichtung 7 die Bremseinrichtung derart an, dass das bereitgestellte Bremsmoment verringert oder begrenzt wird.

## Patentansprüche

1. Verfahren zum Betreiben eines Kraftfahrzeugs (2), wobei eine Abweichung einer aktuellen Fahrposition (P_{Ist}) eines Fahrers (9) des Kraftfahrzeugs (2) von einer erwarteten Referenz-Fahrposition (P_{Ref}) des Fahrers (9) ermittelt wird, und wobei das Kraftfahrzeug (2) in Abhängigkeit von der ermittelten Abweichung angesteuert wird, **dadurch gekennzeichnet, dass** in Abhängigkeit von der Abweichung einerseits und einem Schräglagenwinkel des Kraftfahrzeugs (2) andererseits eine aktuell durch den Fahrer (9) verwendete Kurventechnik ermittelt wird, und dass das Kraftfahrzeug (2) in Abhängigkeit von der ermittelten Kurventechnik angesteuert wird.

2. Verfahren nach Anspruch 1, **dadurch gekennzeichnet, dass** in Abhängigkeit von der ermittelten Abweichung eine Antriebseinrichtung, eine Bremseinrichtung, eine Anzeigeeinrichtung und/oder ein Kommunikationsmodul des Kraftfahrzeugs (2) angesteuert werden.

3. Verfahren nach einem der vorhergehenden Ansprüche, **dadurch gekennzeichnet, dass** die aktuelle Fahrposition (P_{Ist}) durch Ermitteln einer aktuellen Position eines dem Fahrer (9) zugeordneten Nutzergerätes (8) ermittelt wird.

4. Verfahren nach einem der vorhergehenden Ansprüche, **dadurch gekennzeichnet, dass** die Antriebseinrichtung bei Ermitteln, dass die aktuelle Fahrposition (P_{Ist}) in Vorwärtsfahrtrichtung (11) des Kraftfahrzeugs (2) hinter der Referenz-Fahrposition (P_{Ref}) liegt, derart ansteuert wird, dass ein durch die Antriebseinrichtung bereitgestelltes Antriebsmoment verringert oder begrenzt wird.

5. Verfahren nach einem der vorhergehenden Ansprüche, **dadurch gekennzeichnet, dass** die Bremseinrichtung bei Ermitteln, dass die aktuelle Fahrposition (P_{Ist}) in Vorwärtsfahrtrichtung (11) des Kraftfahrzeugs (2) vor der Referenz-Fahrposition (P_{Ref}) liegt, derart ansteuert wird, dass ein durch die Bremseinrichtung bereitgestelltes Bremsmoment verringert oder begrenzt wird.

6. Verfahren nach einem der vorhergehenden Ansprüche, **dadurch gekennzeichnet, dass** zumindest ein Assistenzsystem des Kraftfahrzeugs (2) in Abhängigkeit von der ermittelten Kurventechnik wahlweise freigegeben oder gesperrt wird.

7. Verfahren nach einem der vorhergehenden Ansprüche, **dadurch gekennzeichnet, dass** die Anzeigeeinrichtung des Kraftfahrzeugs (2) und/oder das Kommunikationsmodul des Kraftfahrzeugs (2) derart angesteuert werden, dass die Anzeigeeinrichtung und/oder das Kommunikationsmodul dem Fahrer (9) eine Information bezüglich der ermittelten Kurventechnik bereitstellen.

8. System, mit einem Kraftfahrzeug (2), mit zumindest einem an dem Kraftfahrzeug (2) angeordneten Fahrzeug-Kommunikationsmittel (3), mit zumindest einem getrennt von dem Kraftfahrzeug (2) handhabbaren und einem Fahrer (9) des Kraftfahrzeugs (2) zugeordneten Nutzergerät (8), und mit einer Auswerteeinrichtung (13), wobei das Fahrzeug-Kommunikationsmittel (3) dazu ausgebildet ist, durch das Nutzergerät (8) ausgesendete Signale zu empfangen, und wobei die Auswerteeinrichtung (7) dazu ausgebildet ist, in Abhängigkeit von den empfangenen Signalen eine Abweichung einer aktuellen Fahrposition (P_{Ist}) des Fahrers (9) von einer erwarteten Referenz-Fahrposition (P_{Ref}) des Fahrers (9) zu ermitteln, **gekennzeichnet durch** eine Steuereinrichtung (7) zur Ansteuerung des Kraftfahrzeugs (2), wobei die Steuereinrichtung (7) dazu ausgebildet ist, das Kraftfahrzeug (2) in Abhängigkeit von der ermittelten Abweichung anzusteuern, wobei die Steuereinrichtung (7) dazu eingereicht ist, in Abhängigkeit von der Abweichung einerseits und einem Schräglagenwinkel des Kraftfahrzeugs (2) andererseits eine aktuell durch den Fahrer (9) verwendete Kurventechnik zu ermitteln, und das Kraftfahrzeug (2) in Abhängigkeit von der ermittelten Kurventechnik anzusteuern.

9. System nach Anspruch 8, **gekennzeichnet durch** zumindest ein weiteres Fahrzeug-Kommunikationsmittel (4), wobei das Fahrzeug-Kommunikationsmittel (3) und das weitere Fahrzeug-Kommunikationsmittel (4) voneinander beabstandet an dem Kraftfahrzeug (2) angeordnet sind.

10. System nach einem der Ansprüche 8 oder 9, **dadurch gekennzeichnet, dass** zumindest eines der Fahrzeug-Kommunikationsmittel (3,4) als Bluetooth-Low-Energy-Modul (BLE-Modul) ausgebildet ist, und/oder dass zumindest eines der Fahrzeug-Kommunikationsmittel (3,4) als Ultrabreitband-Modul (UWB-Modul) ausgebildet ist.

11. System nach einem der Ansprüche 8 bis 10, **dadurch gekennzeichnet, dass** das Nutzergerät (8) als Smartphone oder als Smartwatch ausgebildet ist.

12. System nach einem der Ansprüche 8 bis 11, **dadurch gekennzeichnet, dass** das Nutzergerät (8) in ein Bekleidungsstück (10) für den Fahrer (9) integriert ist.

13. System nach Anspruch 12, **gekennzeichnet durch** zumindest ein weiteres Nutzergerät, wobei das Nutzergerät und das weitere Nutzergerät in jeweils unterschiedliche Ärmel des Bekleidungsstücks integriert sind.

## Claims

1. Method for operating a motor vehicle (2), wherein a deviation between a current driving position (P_{Ist}) of a driver (9) of the motor vehicle (2) and an expected reference driving position (P_{Ref}) of the driver (9) is determined, and wherein the motor vehicle (2) is actuated on the basis of the determined deviation, **characterized in that** a cornering technique currently used by the driver (9) is determined on the basis of the deviation on the one hand and an angle of inclination of the motor vehicle (2) on the other hand, and **in that** the motor vehicle (2) is actuated on the basis of the cornering technique determined.

2. Method according to Claim 1, **characterized in that** a drive apparatus, a braking apparatus, a display apparatus and/or a communication module of the motor vehicle (2) are actuated on the basis of the deviation determined.

3. Method according to either one of the preceding claims, **characterized in that** the current driving position (P_{Ist}) is determined by determining a current position of a user device (8) assigned to the driver (9).

4. Method according to any one of the preceding claims, **characterized in that**, when it is determined that the current driving position (P_{Ist}) is behind the reference driving position (P_{Ref}) in the forward direction of travel (11) of the motor vehicle (2), the drive apparatus is actuated in such a way that a drive torque provided by the drive apparatus is reduced or limited.

5. Method according to any one of the preceding claims, **characterized in that**, when it is determined that the current driving position (P_{Ist}) is ahead of the reference driving position (P_{Ref}) in the forward direction of travel (11) of the motor vehicle (2), the braking apparatus is actuated in such a way that a braking torque provided by the braking apparatus is reduced or limited.

6. Method according to any one of the preceding claims, **characterized in that** at least one assistance system of the motor vehicle (2) is optionally enabled or blocked on the basis of the cornering technique determined.

7. Method according to any one of the preceding claims, **characterized in that** the display apparatus of the motor vehicle (2) and/or the communication module of the motor vehicle (2) are/is actuated in such a way that the display apparatus and/or the communication module provide the driver (9) with information regarding the cornering technique determined.

8. System, having a motor vehicle (2), having at least one vehicle communication means (3) arranged on the motor vehicle (2), having at least one user device (8) which can be handled separately from the motor vehicle (2) and is assigned to a driver (9) of the motor vehicle (2), and having an evaluation apparatus (13), wherein the vehicle communication means (3) is designed to receive signals emitted by the user device (8), and wherein the evaluation apparatus (7) is designed to determine a deviation between a current driving position (P_{Ist}) of the driver (9) and an expected reference driving position (P_{Ref}) of the driver (9) on the basis of the received signals, **characterized by** a control apparatus (7) for actuating the motor vehicle (2), wherein the control apparatus (7) is designed to actuate the motor vehicle (2) on the basis of the deviation determined, wherein the control apparatus (7) is configured to determine a cornering technique currently used by the driver (9) on the basis of the deviation on the one hand and an angle of inclination of the motor vehicle (2) on the other hand, and to actuate the motor vehicle (2) on the basis of the cornering technique determined.

9. System according to Claim 8, **characterized by** at least one additional vehicle communication means (4), wherein the vehicle communication means (3) and the additional vehicle communication means (4) are arranged spaced apart from one another on the motor vehicle (2).

10. System according to either one of Claims 8 and 9, **characterized in that** at least one of the vehicle communication means (3, 4) is in the form of a Bluetooth low-energy module (BLE module), and/or **in that** at least one of the vehicle communication means (3, 4) is in the form of an ultra-wideband module (UWB module).

11. System according to any one of Claims 8 to 10, **characterized in that** the user device (8) is in the form of a smartphone or smartwatch.

12. System according to any one of Claims 8 to 11, **characterized in that** the user device (8) is integrated into a garment (10) for the driver (9).

13. System according to Claim 12, **characterized by** at least one additional user device, wherein the user device and the additional user device are each integrated into different sleeves of the garment.

## Revendications

1. Procédé pour faire fonctionner un véhicule à moteur (2), dans lequel un écart entre une position de conduite effective (P_{Ist}) d'un conducteur (9) du véhicule à moteur (2) par rapport à une position de conduite de référence attendue (P_{Ref}) du conducteur (9) est déterminé, et dans lequel le véhicule à moteur (2) est commandé en fonction de l'écart déterminé, **caractérisé en ce qu'**une technique de virage effectivement utilisée par le conducteur (9) est déterminée en fonction, d'une part, de l'écart et, d'autre part, d'un angle de position oblique du véhicule à moteur (2), et **en ce que** le véhicule à moteur (2) est commandé en fonction de la technique de virage déterminée.

2. Procédé selon la revendication 1, **caractérisé en ce qu'**un dispositif d'entraînement, un dispositif de freinage, un dispositif d'affichage et/ou un module de communication du véhicule à moteur (2) sont commandés en fonction de l'écart déterminé.

3. Procédé selon l'une quelconque des revendications précédentes, **caractérisé en ce que** la position de conduite effective (P_{Ist}) est déterminée par détermination d'une position effective d'un équipement d'utilisateur (8) associé au conducteur (9).

4. Procédé selon l'une quelconque des revendications précédentes, **caractérisé en ce que** le dispositif d'entraînement est commandé de manière à déterminer que la position de conduite effective (P_{Ist}) se situe à l'arrière de la position de conduite de référence (P_{Ref}) dans le sens de marche avant (11) du véhicule à moteur (2), de telle sorte qu'un couple d'entraînement fourni par le dispositif d'entraînement soit réduit ou limité.

5. Procédé selon l'une quelconque des revendications précédentes, **caractérisé en ce que**, lorsqu'il est déterminé que la position de conduite effective (P_{Ist}) se situe à l'avant de la position de conduite de référence (P_{Ref}) dans le sens de marche avant (11) du véhicule à moteur (2), le dispositif de freinage est commandé de telle sorte qu'un couple de freinage fourni par le dispositif de freinage soit réduit ou limité.

6. Procédé selon l'une quelconque des revendications précédentes, **caractérisé en ce qu'**au moins un système d'assistance du véhicule à moteur (2) est commandé ou désactivé de manière sélective en fonction de la technique de virage déterminée.

7. Procédé selon l'une quelconque des revendications précédentes, **caractérisé en ce que** le dispositif d'affichage du véhicule à moteur (2) et/ou le module de communication du véhicule à moteur (2) sont commandés de telle sorte que le dispositif d'affichage et/ou le module de communication fournissent au conducteur (9) des informations relatives à la technique de virage déterminée.

8. Système, comprenant un véhicule à moteur (2), au moins un moyen de communication de véhicule (3) disposé sur le véhicule à moteur (2), au moins un équipement d'utilisateur (8) pouvant être manipulé séparément du véhicule à moteur (2) et associé à un conducteur (9) du véhicule à moteur (2), et comprenant un dispositif d'évaluation (13), le moyen de communication de véhicule (3) étant conçu pour recevoir des signaux émis par l'équipement d'utilisateur (8) et le dispositif d'évaluation (7) étant conçu pour déterminer en fonction des signaux reçus un écart entre une position de conduite effective (P_{Ist}) du conducteur (9) et une position de conduite de référence attendue (P_{Ref}) du conducteur (9), **caractérisé par** un dispositif de commande (7) pour commander le véhicule à moteur (2), le dispositif de commande (7) étant conçu pour commander le véhicule à moteur (2) en fonction de l'écart déterminé, le dispositif de commande (7) étant conçu pour déterminer une technique de virage effectivement utilisée par le conducteur (9) en fonction, d'une part, de l'écart et, d'autre part, d'un angle de position oblique du véhicule à moteur (2), et pour commander le véhicule à moteur (2) en fonction de la technique de virage déterminée.

9. Système selon la revendication 8, **caractérisé par** au moins un autre moyen de communication de véhicule (4), dans lequel le moyen de communication de véhicule (3) et l'autre moyen de communication de véhicule (4) sont disposés à distance l'un de l'autre sur le véhicule à moteur (2).

10. Système selon l'une quelconque des revendications 8 ou 9, **caractérisé en ce qu'**au moins l'un des moyens de communication de véhicule (3,4) est réalisé sous la forme d'un module Bluetooth basse énergie (module BLE) et/ou **en ce qu'**au moins l'un des moyens de communication de véhicule (3,4) est réalisé sous la forme d'un module à bande ultra-large (module UWB).

11. Système selon l'une quelconque des revendications 8 à 10, **caractérisé en ce que** l'équipement d'utilisateur (8) est réalisé sous forme de téléphone intelligent ou de montre intelligente.

12. Système selon l'une quelconque des revendications 8 à 11, **caractérisé en ce que** l'équipement d'utilisateur (8) est intégré dans un article vestimentaire (10) destiné au conducteur (9).

13. Système selon la revendication 12, **caractérisé par** au moins un autre équipement d'utilisateur, dans lequel l'équipement d'utilisateur et l'autre équipement d'utilisateur sont intégrés dans des manches respectivement différentes de l'article vestimentaire.
